# EUROPEAN PATENT SPECIFICATION

(11) **EP 4 272 691 B1**
(45) Date of publication and mention of the grant of the patent: **04.02.2026**
(21) Application number: 21915596.7
(22) Date of filing: 10.12.2021
(51) Int. Cl.: A61C 8/00

(54) **DENTAL IMPLANT**
ZAHNIMPLANTAT
IMPLANT DENTAIRE

(30) Priority: 30.12.2020 KR 20200188457; 30.12.2020 KR 20200188458
(43) Date of publication of application: 08.11.2023
(73) Proprietor: Osstemimplant Co., Ltd., Gangseo-gu Seoul 07789 (KR)
(72) Inventor: KIM, Soo Eon, Ulsan 44439 (KR); KIM, In Ho, Busan 46278 (KR); LIM, Hyung Jin, Seoul 07791 (KR)
(74) Representative: Caspary, Karsten
(86) International application number: PCT/KR2021/018807
(87) International publication number: WO 2022/145798

(56) References cited:
- WO-A1-00/03656
- WO-A1-2008/157137
- WO-A1-2017/126821
- KR-A- 20150 115 057
- KR-B1- 101 592 141
- KR-B1- 102 304 071
- KR-B1- 102 304 075
- KR-U- 20120 005 575
- US-A1- 2008 187 886
- US-A1- 2010 092 920

## Description

### Technical Field

The present disclosure relates to a dental implant. More particularly, the present disclosure relates to a dental implant capable of preventing a fatigue fracture.

### Background Art

A dental implant is an artificial tooth capable of permanently replacing a missing tooth, and is widely used to restore a masticatory function of a partially or a completely edentulous region.

Document US 2008/187886 A1 discloses a dental implant comprising an external bottom threaded section with large thread heights and an external top threaded section with small thread heights, the threads of each threaded section being machined with one tool bit and having generally a similar crest width.

Document WO 2017/126821 A1 discloses a dental implant comprising an external bottom threaded section with large thread heights and an external top threaded section with small thread heights; an abutment receiving portion is provided with a tapered portion, a polygonal shape, a cylindrical portion, and a threaded portion.

The dental implant (hereinafter, briefly referred to as "implant") should not only be functionally capable of acting as an actual tooth, but also be manufactured to properly distribute a load applied to the tooth so that the tooth can be used for a long time as an actual tooth.

An implant that is implanted into an alveolar bone may be divided into an external connection type implant and an internal connection type implant according to a form in which an abutment and an implant are coupled to each other. The external connection type implant having a regular hexagonal structure that protrudes to an upper portion of the implant has an advantage that the implant implanted into a bone is relatively solid, but there is a disadvantage that osteolysis at a boundary portion occurs since a gap between an implant body and an abutment is wide in an initial stage after an implantation process is performed and there is a high probability that bacteria inhabits in the gap.

The internal connection type implant has an advantage that an implantation success rate is high by minimizing an initial osteolysis since a polygonal shape groove (hereinafter, briefly referred to as "polygonal part") is formed inside the implant and a portion where an abutment and the implant are in contact with each other is formed in a cone shape so that a space where bacteria inhabits is excluded. However, due to a structural limitation caused by the abutment entering inside the implant, there is a relatively high possibility of a fracture of the implant implanted into the bone.

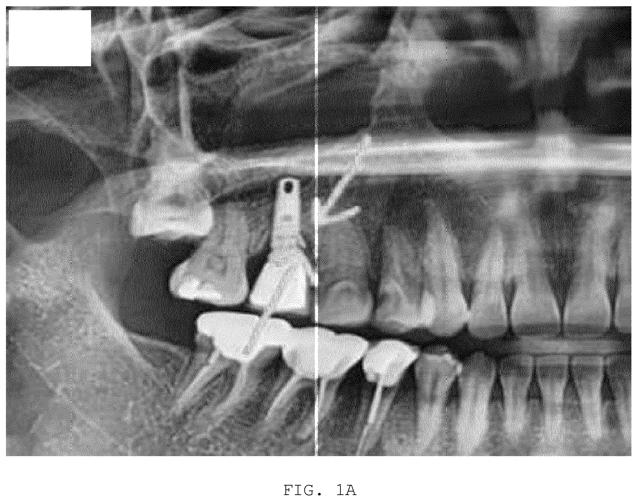

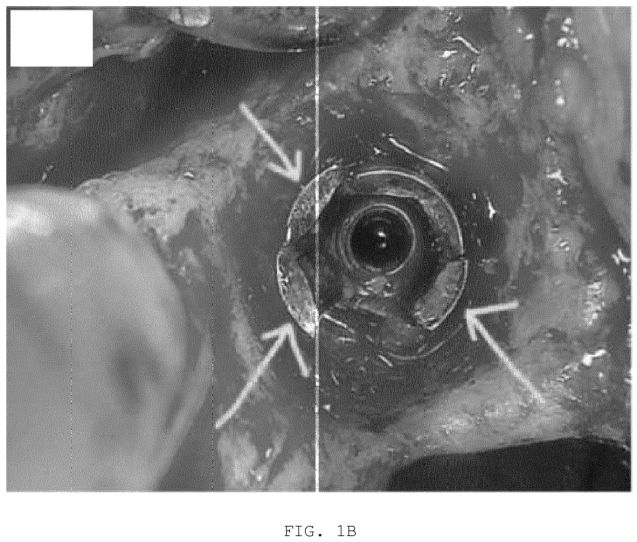

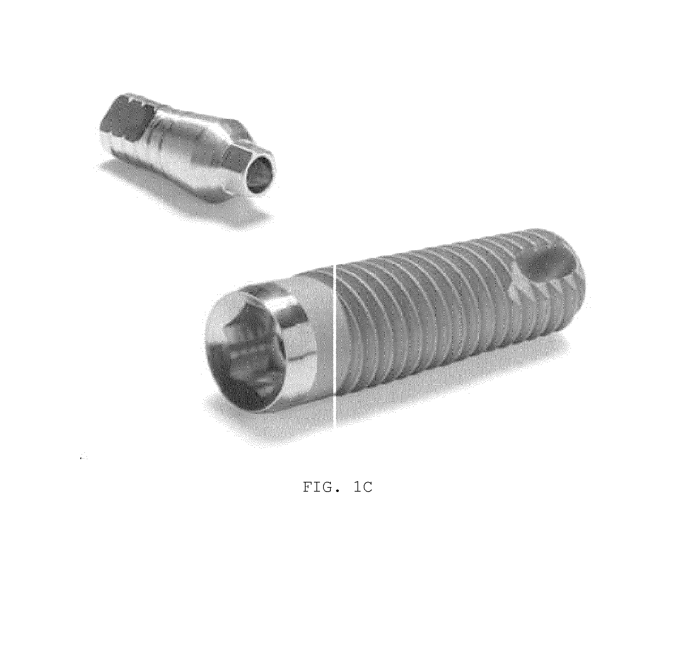

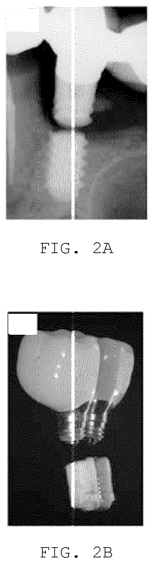

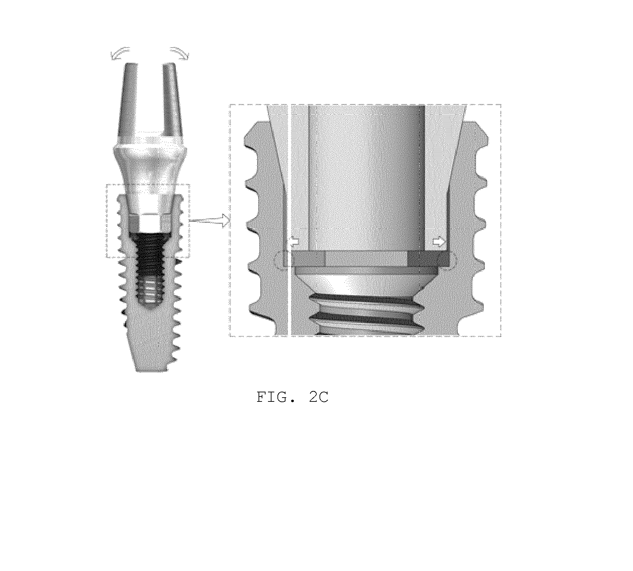

FIG. 1 and FIG. 2 illustrate fracture examples of an implant.

FIG. 1A is a PA (periapical) radiograph of an implant used 15 years after implantation in a patient, and a state in which a top of the implant is torn off aside can be seen. FIG. 1B is a photograph taken in a state in which a prosthesis and an abutment are removed, and a state in which an implant is split into several parts along an edge of a polygonal part can be seen. FIG. 1C is a photograph showing an abutment and an implant to be implanted, and it can be seen that an inclination angle of an inclined part where the abutment and the implant are in contact with each other is large and the implant has a structure in which an edge surface having a thickness of a top of the implant close to zero is provided.

As illustrated in the example in FIG. 1, a fracture that occurs along an axis line of the implant is commonly referred to as a longitudinal fracture. A fracture shown in the PA radiograph in FIG. 2A and in a photograph in FIG. 2B taken after an implant and a prosthesis are extracted is referred to as a transverse fracture occurring in a horizontal direction at a boundary portion where an abutment body and a polygonal part of a fixed body are in contact with each other.

Such a fracture is derived from a fatigue phenomenon, and a dental implant is a structure for replacing a missing tooth. Therefore, since the dental implant repeatedly receives stress according to a masticatory movement, a fatigue fracture may occur in the dental implant.

Particularly, as illustrated in FIG. 2C, in the masticatory movement, not only a vertical masticatory force in an axis line direction of the implant acts on the abutment but also a horizontal masticatory force perpendicular to the axis line direction complexly acts. Therefore, a moment as indicated acts, and a bottom of the abutment is in contact with the polygonal part, so that a repetitive force may be applied to the polygonal part.

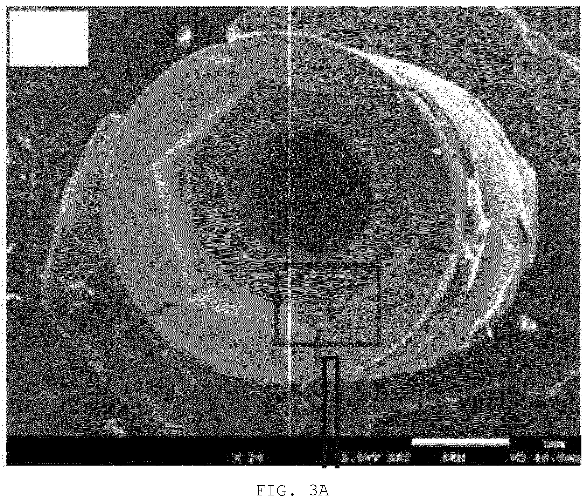

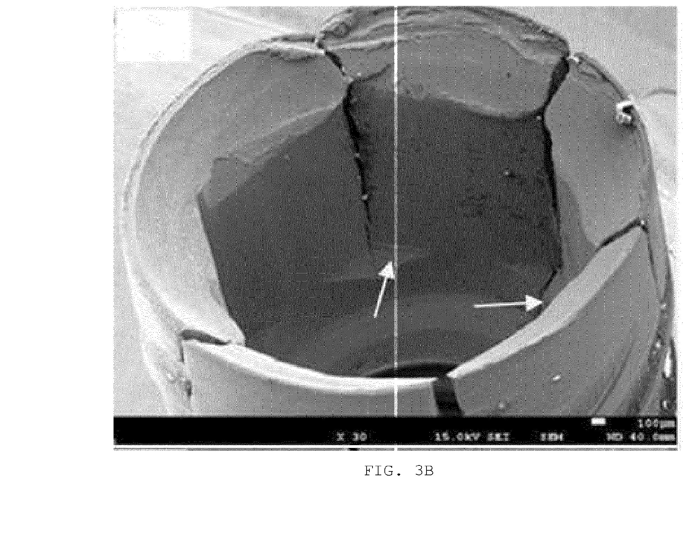

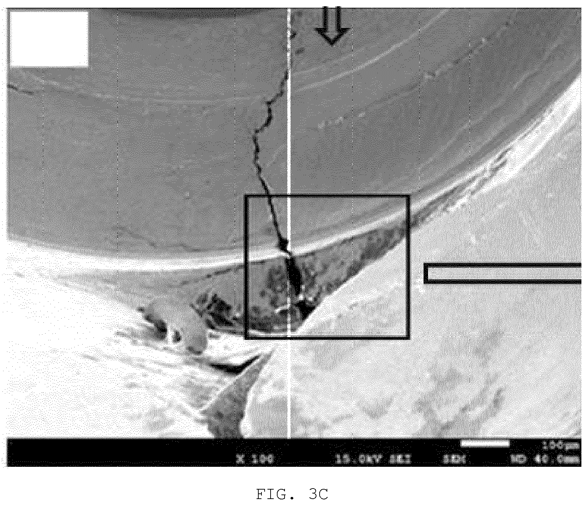

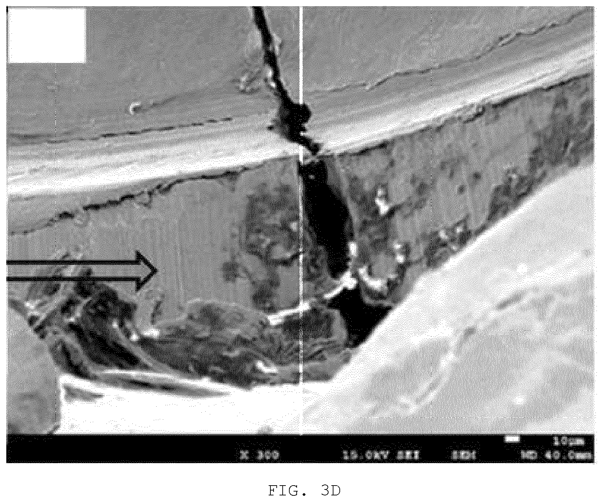

Referring to FIG. 3, it can be seen that a longitudinal fracture occurring in the implant as illustrated in FIG. 1 is initiated and propagated at crack nuclei of a bottom surface part of the polygonal part indicated by white arrows in FIG. 3B.

A SEM photograph of FIG. 3C is a photograph taken by enlarging a blind region of a photograph of FIG. 3A, and a photograph of FIG. 3D is a photograph taken by enlarging a blind region of a photograph of FIG. 3C and shows a crack propagation state around crack nuclei where a crack propagation is initiated.

### Disclosure

### Technical Problem

Accordingly, the present disclosure has been made keeping in mind the above problems occurring in the related art, and an objective of the present disclosure is to provide a dental implant in which an external top thread section of the implant machined to have threads having small valley depths extends to a predetermined position below a polygonal part inside the implant, thereby being capable of preventing a transverse fracture that occurs by stress concentration near the polygonal part inside the implant.

Another objective of the present disclosure is to provide a dental implant in which a boring section for removing or reducing a possibility of existence of crack nuclei is provided below a polygonal part inside the implant and an external top thread section machined to have thread having small valley depths extends to a predetermined position on the basis of the boring section, thereby being capable of preventing a fatigue fracture caused by stress concentration near the polygonal part inside the implant.

### Technical Solution

In order to achieve the above objectives, according to the present disclosure, there is provided a dental implant implantable into an alveolar bone tissue and forming an artificial tooth root, the dental implant including: an external bottom thread section machined up to a predetermined section upward from a bottom of an outer peripheral surface of the implant so that threads having large heights are formed by a first bit; and an external top thread section machined above the external bottom thread section so that threads having small heights are formed by a second bit having a machining surface shape and a width that are different from a machining surface shape and a width of the first bit.

The threads of each thread section machined through the first bit and the second bit have the same pitches and the same crest widths.

Here, a thread valley depth of the external top thread section may be gradually decreased from a lower portion of the external top thread section to an upper portion of the external top thread section.

In addition, the external top thread section may be provided with a thread non-machining section in which threads are not machined over a predetermined section downward from a topmost of the implant.

At this time, the thread non-machining section may be formed from the topmost of the implant to a position of 0.2 mm to 0.3 mm downward.

In this case, an ending point that is a point at which an inclination of an external top thread machining trajectory is changed may be set at a lower side of the thread non-machining section, and the ending point may be positioned at a point of 0.6 mm to 0.8 mm from the topmost of the implant.

At this time, a movement trajectory in which the second bit performing a thread machining of the external top thread section moves away from the ending point after the thread machining is finished may be inclined at an angle of 23.5 degrees to 26.5 degrees with respect to an axis line of the implant.

Meanwhile, an internal groove to which an abutment for prosthesis supporting is capable of being coupled may be formed inside a top portion of the implant, and the internal groove may include: an upper side inclined part positioned at a top entrance part of the implant, the upper side inclined part having a circular cross-sectional shape and having an inner diameter gradually decreased downward; a polygonal part formed below the upper side inclined part, the polygonal part having a polygonal cross-sectional shape; and a screw part for abutment coupling formed below the polygonal part, the screw part having threads that have a diameter smaller than a diameter of a circle inscribed in the polygonal shape of the polygonal part.

Here, the external top thread section may be positioned from a bottom of the polygonal part to a lower side section by 2 to 4 threads when viewed from a top surface of the implant.

In addition, the internal groove may further include a circular vertical part having a circular cross-sectional shape and being formed below the polygonal part such that the circular vertical part is connected to the polygonal part.

In addition, the internal groove may further include a lower side inclined part formed between the circular vertical part and the screw part for abutment coupling such that the lower side inclined part connects the circular vertical part and the screw part for abutment coupling to each other, the lower side inclined part having a top that has a diameter same as a diameter of the circular vertical part, the lower side inclined part having a bottom that has a diameter same as a diameter of the screw part for abutment coupling, and the lower side inclined part being formed such that an inner diameter thereof is gradually decreased downward.

Meanwhile, a boring section having a circular shape and having a diameter larger than a diameter of a circle circumscribed to the polygonal shape of the polygonal part may be formed between a bottom of the polygonal part and a top of the screw part for abutment coupling.

In this case, the external top thread section may be positioned from a bottom of the boring section to a lower side section by 2 to 4 threads when viewed from a top surface of the implant.

In addition, the boring section having the circular shape may be provided with a first circular vertical part and a round part which is positioned below the first circular vertical part and which has a predetermined curvature, and a diameter of the first circular vertical part may be larger than the diameter of the circle circumscribed to the polygonal part.

In this case, a ratio of the diameter of the first circular vertical part of the boring section having the circular shape to the diameter of the circle circumscribed to the polygonal part may be equal to or larger than 100% to equal to or smaller than 115%.

In addition, an overall height along an axis line direction of the boring section having the circular shape may be set to 0.1 mm to 1.5 mm.

In addition, a plane shape of the polygonal part may be any one shape of a regular hexagonal shape, a regular octagonal shape, and a regular dodecagonal shape.

The object of the present invention is defined in claim 1.

### Advantageous Effects

In the dental implant structure having the configuration described above according to an embodiment of the present disclosure, the external top thread section machined to have the threads having small valley depths is formed on the implant, and the external top thread section is positioned from the bottom of the polygonal part to the lower side section by 2 to 4 threads on the basis of the top surface of the implant. Therefore, an implant thickness near the polygonal part is capable of being secured, and a structural rigidity near the polygonal part is capable of being increased, so that there is an effect that a transverse fracture that occurs by stress concentration near the polygonal part may be prevented.

In addition, in the dental implant structure according to another embodiment of the present disclosure, the upper side inclined part, the polygonal part, and the screw part for abutment coupling are included inside the top portion of the implant, the circular boring section having the diameter larger than the diameter of the circle circumscribed to the polygonal shape of the polygonal part is provided between the bottom of the polygonal part and the top of the screw part for abutment coupling. Furthermore, the external top thread section machined to have the threads having small valley depths is formed on the implant, and the external top thread section is positioned from the bottom of the boring section to the lower side section by 2 to 4 threads when viewed from the top surface of the implant. Therefore, stress concentration near the polygonal part may be prevented and the implant thickness may be secured, and the structural rigidity of the corresponding portion may be increased, so that there is an effect that a fatigue fracture that occurs by stress concentration near the polygonal part of a conventional technology may be prevented.

In addition, when the external top thread machining of the implant by using the bit is performed, a closed thread structure is formed on an external top of the implant by changing a departure position and a departure angle of the bit, so that the thickness of the top portion of the implant is increased. Therefore, the structural rigidity of the top portion of the implant may be increased, and a longitudinal fracture caused by a fatigue fracture at the top portion of the implant may be prevented.

### Description of Drawings

FIG. 1 shows photographs showing a longitudinal fracture example of an implant.
FIG. 2 shows photographs and a view, the photographs showing a transverse fracture example of an implant, the view illustrating a state in which a bottom corner of an abutment generates stress on a polygonal part of an implant.
FIG. 3 shows photographs showing that a longitudinal fracture of an implant is initiated at a bottom corner of a polygonal part.
FIG. 4 shows a perspective view and a plan view that are illustrating a structure of a dental implant according to the present disclosure.
FIG. 5 is a front view of FIG. 4.
FIG. 6 is a cross-sectional view illustrating an external thread structure of the implant according to the present disclosure.
FIG. 7 is a cross-sectional view specifically illustrating an internal structure of the implant according to the present disclosure.
FIG. 8 is an exemplary view illustrating a movement trajectory of a bit when an external top thread machining of the implant is performed.
FIG. 9 is a front view specifically illustrating a position where a thread non-machining section and a closed thread structure at a top of the implant are formed.
FIG. 10 shows exemplary views illustrating a comparison of thread valley widths in a case of machining external threads by using bits having the same shape and in a case of machining external threads by using bits having shapes different from each other.
FIG. 11 is a view specifically illustrating an external top thread forming section having small valley depths in the implant of the present disclosure.
FIG. 12 shows SEM photographs illustrating a metal flow line of a polygonal part of a conventional technology and a metal flow line of a bottom corner portion of a polygonal part according to the present disclosure.
FIG. 13 shows a photograph and a view, the photograph showing a punching tool used for plastic machining of a polygonal part, the view illustrating a punching machining process.
FIG. 14 shows an embodiment of an implant polygonal part machining method of the present disclosure.
FIG. 15 shows another embodiment of the implant polygonal part machining method of the present disclosure, resulting in an implant according to the invention.
FIG. 16 shows a lower portion formation process of a polygonal vertical part according to the machining method of FIG. 14.
FIG. 17 shows a lower portion formation process of a polygonal vertical part according to the machining method of FIG. 15.
FIG. 18 shows a plan view, a perspective view, and a cross-sectional view that are illustrating the structure of the dental implant according to the present disclosure.
FIG. 19 is a front view of the structure of the dental implant according to the present disclosure.
FIG. 20 is a cross-sectional view illustrating a relationship between the internal structure and the external thread structure of the implant according to the present disclosure.
FIG. 21 is a cross-sectional view specifically illustrating the external thread structure of the implant according to the present disclosure.
FIG. 22 is a cross-sectional view illustrating the internal structure of the implant according to the present disclosure.

Hereinafter, an embodiment of the present disclosure will be described in detail with reference to the accompanying drawings such that those skilled in the art to which the present disclosure belongs can easily embody the present disclosure.

However, the present disclosure may be embodied in several different forms and is not limited to the embodiment described herein. In addition, it should be noted that parts denoted by the same reference numerals throughout the detailed description mean the same components.

Hereinafter, an embodiment of a dental implant according to the present disclosure will be described in detail with reference to the accompanying drawings.

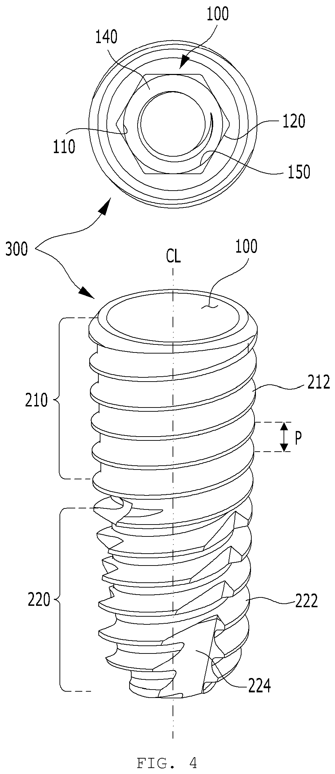

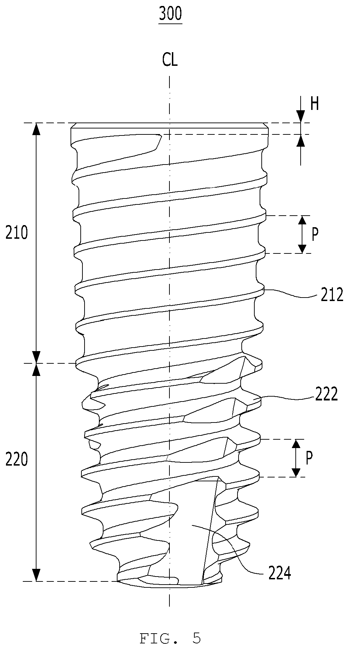

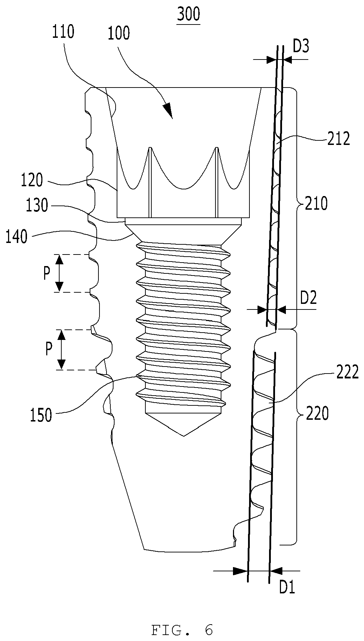

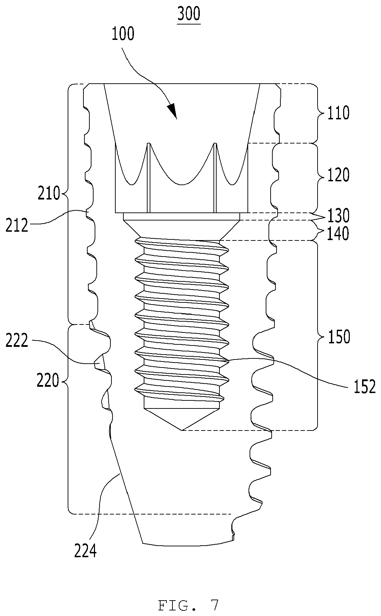

FIG. 4 shows a perspective view and a plan view illustrating a dental implant structure according to an embodiment of the present disclosure, and FIG. 5 is a front view of FIG. 4. In addition, FIG. 6 is a cross-sectional view illustrating an external thread structure of the implant, and FIG. 7 is a cross-sectional view specifically illustrating an internal structure of the implant.

Referring to FIG. 4 to FIG. 7, a dental implant 300 according to an embodiment of the present disclosure is a structure forming an artificial tooth root by being implanted into an alveolar bone tissue according to a rotational behavior with respect to a central axis CL, and a plurality of threads 212 and 222 having the same (single) pitch in a vertical direction is formed on an outer peripheral surface of the implant 300 of the present disclosure.

In this case, in order to machine the threads 212 and 222 having the same pitch P on the outer peripheral surface of the implant 300, two bits having different machining surface shapes are sequentially entered into a machining target surface of an implant base material before the threads are machined, and then a machining process is performed by moving the two bits from a bottom of the implant 300 to a top of the implant 300, so that the two thread sections 210 and 220 having valley depths different from each other may be formed on the outer peripheral surface of the implant 300.

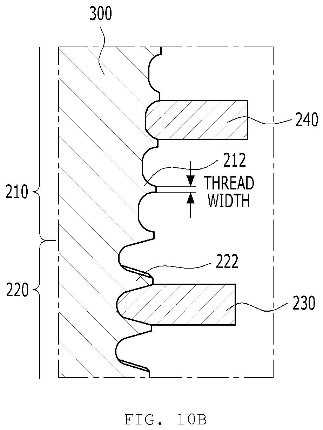

Here, when the two thread sections 210 and 220 having thread valley depths different from each other are formed on the outer peripheral surface of the implant 300, the external bottom thread section 220 may be formed by machining the threads 222 having large valley depths (or large crest heights) through a first bit 230 (illustrated in FIG. 10B) up to a predetermined section upward from the bottom of the implant 300, and the external top thread section 210 may be formed by machining the threads 212 having small valley depths (or small crest heights) through a second bit 240 above the external bottom thread section 220.

In this case, as illustrated in FIG. 6, valley depths D2 and D3 of the threads 212 formed on the external top thread section 210 are formed to be smaller than a valley depth D1 of the threads 222 formed on the external bottom thread section 220. Particularly, in the external top thread section 210, the valley depths D2 and D3 (or crest heights) of the threads 212 may be formed in a structure in which the valley depths D2 and D3 are gradually lowered from a bottom of the threads 212 to a top of the threads 212. That is, in the external top thread section 210, the valley depth of the bottommost threads to an upper portion of the threads, so that the valley depth D3 of the topmost threads may be formed to be the lowest.

For example, in the external top thread section 210, the threads 212 at the bottommost having the highest height may have a height of 0.22 mm, the thread 212 at the topmost may have a height of 0.12 mm. Furthermore, since a height of the threads may gradually decrease from the threads at the bottommost having the highest height (0.22 mm) to the upper portion of the threads, the threads 212 in which the topmost threads may have the lowest height (0.12 mm) may be formed.

In this manner, when a structure in which the height (depth) of the threads 212 formed on the external top thread section 210 of the implant 300 gradually decreases toward the upper portion of the threads 212 is formed, the implant 300 may be more securely fixed to a cortical bone region of an alveolar bone surface, and also a wall thickness of a top portion of the implant 300 is increased so that a rigidity of the top portion of the implant 300 is secured, so that a longitudinal fracture that occurs at the top portion of the implant 300 may be prevented.

Meanwhile, an internal groove 100 having a specific shape inwardly recessed by a predetermined depth from the top of the implant 300 is formed in an internal side of the top portion of the implant 300 so that an abutment for supporting a prosthesis is coupled thereto. At this time, the internal groove 100 is formed in a structure in which an upper side inclined part 110, a polygonal part 120, a circular vertical part 130, a lower side inclined part 140, and a screw part for abutment coupling 150 are sequentially arranged downward from a top entrance of the implant 300.

Specifically, the upper side inclined part 110 is a portion positioned at a top entrance portion of the implant 300, has a circular cross-sectional shape, and is formed in a shape structure in which an inner diameter width thereof gradually decreases downward.

In addition, the polygonal part 120 is a portion connected to a lower side of the upper side inclined part 110, is formed in a hexagonal cross-sectional shape, and is provided so as to fasten a driver (not illustrated) when an implantation operation of the implant 300 is performed. At this time, the polygonal part 120 is proposed as an embodiment shape, and may be formed in various regular polygonal shapes such as an octagonal shape, a dodecagonal shape, and so on, in addition to the hexagonal shape.

The circular vertical part 130 is a portion which has a circular cross-sectional shape and which is connected to a lower side of the polygonal part 120. The lower side inclined part 140 is a portion connecting a space between the circular vertical part 130 and the screw part for abutment coupling 150, and has a top thereof having a diameter same as a diameter of the circular vertical part 130 and has a bottom thereof having a diameter same as a diameter of the screw part 150 for abutment coupling. Such a lower side inclined part 140 is also formed in a structure in which an inner diameter thereof gradually decreases toward the lower side thereof.

The screw part 150 for abutment coupling is connected to the lower side of the lower side inclined part 140, and is a portion on which threads 152 for abutment coupling having a diameter smaller than a diameter of a circle that is inscribed in a hexagonal portion of the polygonal part 120 are formed.

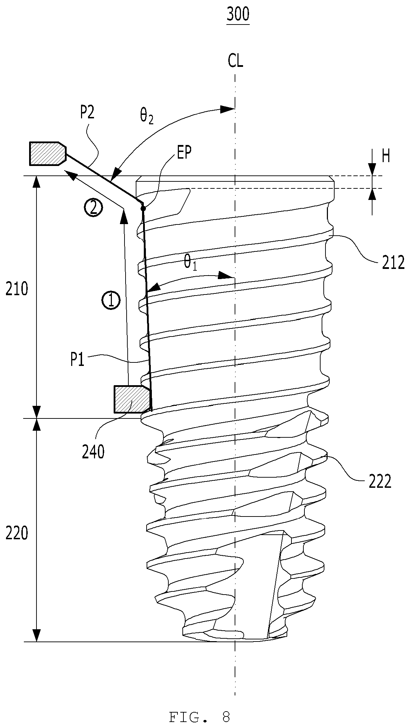

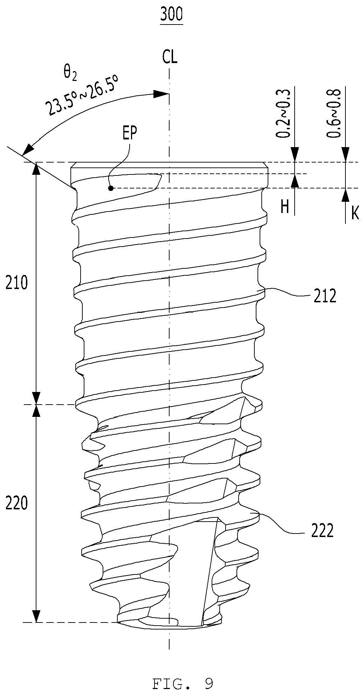

Meanwhile, as illustrated in FIG. 8, in the implant 300 of the present disclosure, a thread non-machining section H on which a thread machining is not performed over a predetermined section from the topmost of the implant 300 toward the lower side of the implant 300 is provided at the upper portion side of the external top thread section 210. At this time, it is preferable that the thread non-machining section H is formed from the topmost of the implant 300 to a position point 0.2 mm to 0.3 mm in a downward direction (see FIG. 9). In addition, a chamfer machining of about 0.12 mm may be performed on a circumferential portion of a top surface of the thread non-machining section H.

Such a thread non-machining section H is a section provided so as to secure a robustness for the top portion of the implant 300 where a longitudinal fracture may occur. Since threads are not formed on a portion of the thread non-machining section H, the portion of the thread non-machining section H is not inserted into an inner side of an alveolar bone and is partially exposed to an upper portion surface of the alveolar bone when the implant 300 is implanted into the alveolar bone.

However, since the thread non-machining section H formed on the top of the implant 300 is a section formed such that the thread non-machining section H has a very small length (0.2 mm to 0.3 mm) compared to an overall length of the implant 300, a support rigidity of the implant 300 inside the alveolar bone is not significantly reduced even though the thread non-machining section H is not implanted inside the alveolar bone.

In this manner, when the thread non-machining section H on which threads are not machined is formed on the top of the implant 300, a supporting force of the implant 300 is not significantly reduced when the implant 300 is implanted inside the alveolar bone, and also a predetermined level of thickness for the top of the implant 300 may be secured, so that a structural rigidity of the top portion of the implant 300 may be increased.

Meanwhile, in order to form the two thread sections 210 and 220 having different thread valley depths (or thread crest heights) on the outer peripheral surface portion of the implant 300 of the present disclosure, a thread machining is performed on a machining target surface by using the two bits 230 and 240 as illustrated in FIG. 10B.

In a conventional process of an implant thread machining, a bit enters a bottom of a machining target surface of an implant while an implant base material is rotated, and the bit is moved upward along a determined constant movement trajectory so as to perform the thread machining. In this case, a thread height may be adjusted by adjusting an entry depth of the bit into the machining target surface of the implant base material.

In the implant 300 of the present disclosure, when the external bottom thread section 220 is formed, the threads 222 having a large thread valley depth (or a large crest height) are machined by entering the first bit 230 into the implant base material. Furthermore, at the time when the machining of the threads 222 by the first bit 230 is finished, the first bit 230 is replaced with the second bit 240, and the machining of the threads 212 of the external top thread section 210 is performed.

In this case, as described above, since the thread non-machining section H in which the thread machining is not performed is formed up to a predetermined depth (0.2 mm to 0.3 mm) from the topmost of the implant 300, the external top thread machining of the implant 300 by the second bit 240 is not performed up to the topmost portion of the implant 300, and the thread machining is finished by largely changing an inclination of a machining trajectory of the second bit 240 at a point spaced apart downward by a predetermined distance from the topmost of the implant 300. Therefore, as illustrated in FIG. 4 and FIG. 5, the external top of the implant 300 may be formed in a closed thread structure.

FIG. 8 is a view illustrating a movement trajectory of a bit when the external top thread machining of the implant 300 is performed, and FIG. 9 is a view specifically illustrating a position at the top of the implant 300 where the thread non-machining section H and the closed thread structure are formed.

As illustrated in FIG. 8 and FIG. 9, in order to form the closed thread structure on the external top of the implant 300, when the external top thread machining by the second bit 240 is performed, a specific point at which the second bit 240 moving along a first movement trajectory P1 and performing machining of the threads 212 deviates from the first movement trajectory P1 and moves to a second movement trajectory P2 is required to be set.

That is, when an ending point (EP) at which the second bit 240 moving along the first movement trajectory P1 and performing machining of the threads 212 deviates from the first movement trajectory P1 (or a starting point of the second movement trajectory) is set to a lower side of the thread non-machining section H, the closed thread structure may be formed on the external top of the implant 300.

In more detail, as illustrated in FIG. 8, when the external top thread machining of the implant 300 is performed, the second bit 240 enters into the bottom of the machining target surface of the implant 300 and then is moved upward along the first movement trajectory P1, thereby performing the machining of the threads 212. Furthermore, at the time when the machining of the threads 212 is finished, the second bit 240 deviates from the first movement trajectory P1 and then is moved along the second movement trajectory P2.

At this time, the first movement trajectory P1 in which the second bit 240 is moved so as to perform the external top thread machining is not parallel to the central axis of the implant 300 in which the central axis is an axis line CL, and the first movement trajectory P1 has a shape inclined by a first angle θ1 with respect to the axis line CL. As a result, the external top thread section 210 of the implant 300 has a shape in which a diameter thereof gradually decreases downward.

In addition, the second movement trajectory P2 where the second bit 240 moving along the first movement trajectory P1 and performing the thread machining deviates from the ending point EP of the top of the implant 300 and moves thereto is formed such that the second movement trajectory P2 is inclined by a second angle θ2 with respect to the axis line CL of the implant 300.

At this time, when the second angle θ2 between the second movement trajectory P2 and the axis line CL is formed such that the second angle θ2 has an angle sufficiently larger than the first angle θ1 between the first movement trajectory P1 and the axis line CL, no further thread machining is performed after a specific point where the second bit 240 moving along the first movement trajectory P1 and performing the thread machining deviates from the ending point EP and then moves along the second movement trajectory P2. Therefore, threads positioned at the topmost of the external top thread section 210 of the implant 300 may be formed in the closed thread structure in the form of being blocked at the lower side of the thread non-machining section H without passing through the top surface of the implant 300.

In this case, it is preferable to set the ending point EP where the machining of the threads 212 by the second bit 240 is finished to be positioned at a point K spaced apart by 0.6 mm to 0.8 mm from the topmost of the implant 300. At this time, the ending point EP refers to a center position point of the second bit 240 at a time point when the second bit 240 deviates from the first movement trajectory P1.

In addition, it is preferable to set the second movement trajectory P2 where the second bit 240 is moved after the thread machining is finished to be inclined at an angle of 23.5 degrees to 26.5 degrees with respect to the axis line CL of the implant 300.

As such, in the external top thread machining of the implant 300, when the second bit 240 is set such that the second bit 240 performs the thread machining by moving along the first movement trajectory P1 after the second bit 240 initially enters the implant 300 and then the second bit 240 deviates from the machining target surface at an angle of 23.5 degrees to 26.5 degrees at a position 0.6 mm to 0.8 mm below the topmost surface of the implant 300 and moves along the second movement trajectory P2, the closed thread structure may be formed on the top portion of the implant 300.

As described above, in machining the external top thread of the implant 300, since the closed thread structure may be formed on the top portion of the implant 300 by changing a departure position and a departure angle of the second bit 240, a structural rigidity of the top portion of the implant 300 may be increased by reinforcing a thickness of the top portion of the implant 300, so that a longitudinal fracture that frequently occurs on the top portion of the implant 300 may be prevented.

Meanwhile, in order to machine the threads 212 and 222 having the same pitch P on the external surface of the implant 300, a difference in shape of a machining surface of each end portion of the first bit performing the external bottom thread machining of the implant 300 and the second bit 240 performing the external top thread machining of the implant 300 is required to be accompanied.

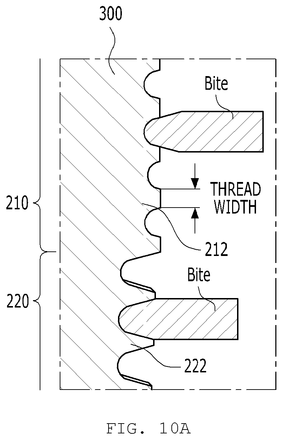

FIG. 10 shows thread valley depths and thread widths when external threads are machined on an implant by using bits having the same shape and when external threads are machined on an implant by using two bits having shapes different from each other.

First, in FIG. 10A, a case in which the external bottom threads 222 and the external top threads 212 are machined by using the bits having the same shape is illustrated. When the bits having the same end portion machining surface shape are used, crest widths of the external top threads 212 having small valley depths are widened. Therefore, when the implant 300 is implanted into an alveolar bone, a relatively large torque is required, so that an implantation process of the implant 300 is not smoothly performed and damage to the alveolar bone may occur.

On the other hand, as illustrated in FIG. 10B, in the present disclosure, the thread machining is performed by varying the shape and width of the end portion machining surfaces of the first bit 230 and the second bit 240 that are configured to respectively machining the external bottom threads 222 and the external top threads 212. Therefore, a thread structure in which the pitch P of each thread is the same and the crest width of each thread is the same although valley depths of each of the threads 212 and 222 respectively formed at the external top of the implant 300 and at the external bottom of the implant 300 are different from each other may be formed. As such, when the crest width of the threads is formed narrowly, an area of the thread valley is increased compared to that of a conventional technology, so that an advantageous effect in a blasting process or a coating process may be realized.

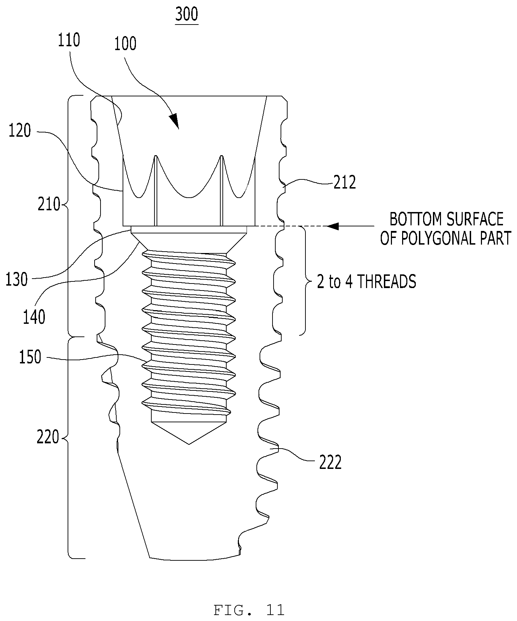

Meanwhile, FIG. 11 specifically illustrates a forming position of the external top thread section 210 in the implant 300 of the present disclosure.

As illustrated in FIG. 11, the implant 300 of the present disclosure may be formed such that the bottom of the external top thread section 210 is positioned downward to a lower side position by 2 to 4 threads 212 from a bottom surface of the polygonal part 120 inside the implant 300 as a starting point when the external top thread section 210 having the threads 212 that have small heights (or valley depths) is formed.

In this manner, when the external top thread section 210 is formed such that the bottommost of the external top thread section 210 is positioned at the lower side by 2 to 4 threads 212 from the bottom surface of the polygonal part 120 inside the implant 300, a disadvantage that a position around the polygonal part 120 may become a starting point of a fatigue fracture crack since a geometrical ununiformity point is generated at a bottom corner portion of the polygonal part as previously when a punching process is performed so as to form the polygonal part 120 in the internal groove 100 of the implant 300 is capable of being prevented by forming the threads 212 having the small depth so as to indirectly reinforce the thickness of the corresponding portion, thereby being capable of preventing a transverse fracture phenomenon that occurs around the polygonal part as a conventional technology.

Meanwhile, hereinafter, a dental implant structure according to another embodiment of the present disclosure will be described. Particularly, hereinafter, a devising process of the present disclosure will be described in detail with reference to the accompanying drawings, and an exemplary embodiment of the present disclosure will be described in detail.

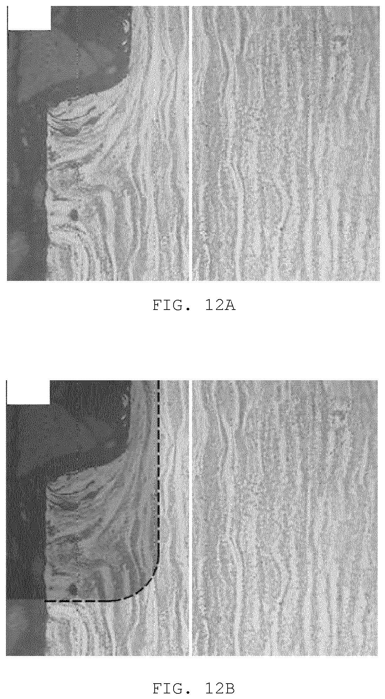

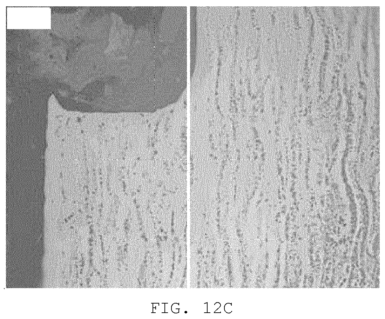

FIG. 12 shows SEM photographs showing a necessity and application results of the present disclosure, in which the SEM photograph in FIG. 12A shows a metal flow line of a bottom corner portion of a polygonal part manufactured by a conventional technology.

Referring to the SEM photograph in FIG. 12A, in the polygonal part manufactured by the conventional technology, it can be seen that a severe plastic deformation is caused at a lower side corner portion of the polygonal part (a white portion in the photograph is an implant portion, and a lower side portion of a region having a step, which is a left side bottom portion, is the lower side corner portion of the polygonal part, and it can be seen that crack nuclei having defects exist in the lower side corner portion of the polygonal part. On the other hand, the SEM photograph in FIG. 12B shows that a portion marked with a dotted line is removed as a boring section described later, and it can be seen that a possibility of existence of crack nuclei may be significantly reduced since a plastic deformation portion is removed and a vertically uniform metal flow line in an original base material state is remained. Furthermore, the SEM photograph in FIG. 12C shows that a boring section in the present disclosure is formed by another method (machining a polygonal part after pre-machining the boring section), and it can be seen that a possibility of existence of crack nuclei is significantly reduced since a vertically uniform metal flow line in an original base material state is maintained without having a plastic deformation portion as shown in the SEM photograph in FIG. 12A.

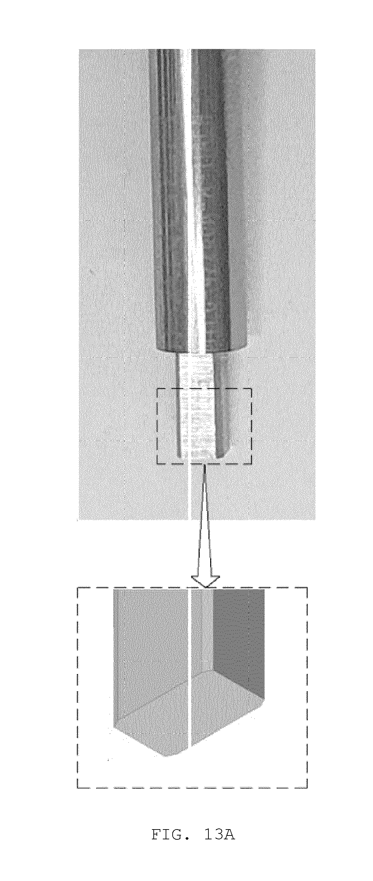

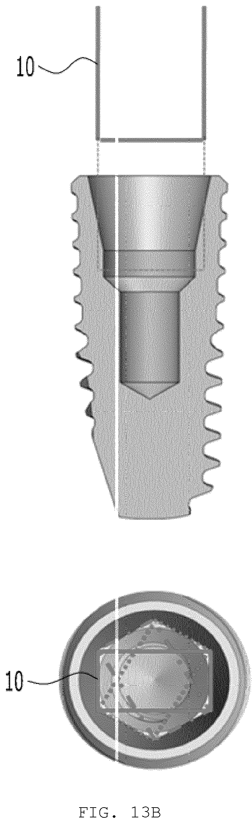

Looking at a manufacturing process of a conventional polygonal part so as to identify a cause of the problem as shown in the photograph in FIG. 12A in the conventional technology, a punching tool having a rectangular cross-sectional shape at a distal end thereof as illustrated in FIG. 13 is used so as to machine the polygonal part. As illustrated in FIG. 13B, an inclined surface having a circular cross-sectional shape for abutment seating is machined to an internal groove of a circular rod that becomes a base material of an implant, and a punching tool 10 is hit downward strongly. In a next process, the punching tool 10 is hit again at a position where the punching tool is rotated at an angle of 60 degrees (marked with a dotted line), and the punching tool 10 is hit again at a position where the punching tool is rotated at an angle of 60 degrees (marked with a dashed-dotted line) in a next process, so that the polygonal part having hexagonal corners is formed.

In addition, in the process of strongly hitting downward the punching tool having rectangular corners, a residual stress is generated in the implant in a process in which a plastic deformation occurs while the base material that is in contact with the corner portion of the punching tool is cornered downward. In an ideal case, the residual stress is a compressive residual stress, and is expected to have an effect of suppressing a propagation of a fatigue fracture by applying a compressive force around a crack initiation point during a fatigue fracture behavior.

However, in an actual case, since a behavior of cutting a side surface of the base material by the corner portion of the punching tool 10 is mixed with a behavior of compressing and deforming the base material, each corner portion of the polygonal part is in a situation in which a uniform compressive residual stress that is generally expected during a plastic machining cannot be expected. In addition, a separated part of the base material at a machining surface microscopically observed is eventually present as a crack nucleus, and it can be seen that a large number of crack nuclei generated from a part of the finely separated base material are irregularly distributed at the left surface of the polygonal part and the crack nuclei may provide a cause of a fatigue fracture.

Therefore, in the present disclosure, the polygonal part is formed by a punching process in a manner completely different from a conventional polygonal part machining process, and then a region corresponding to the left surface of the polygonal part is removed by performing a boring machining with a diameter larger than a length from a geometric center point of the punching tool to the corner through a lathe machining. Otherwise, after the region corresponding to the left surface of the polygonal part is removed by a pre-machining with a diameter equal to or slightly larger than the length from the geometric center point of the punching tool to the corner through the lathe machining, a process of hitting the punching tool is performed, so that a free space where the base material pushed in by the punching tool is capable of being escaped is secured, thereby being capable of significantly reducing a severe plastic deformation and a possibility of existence of crack nuclei.

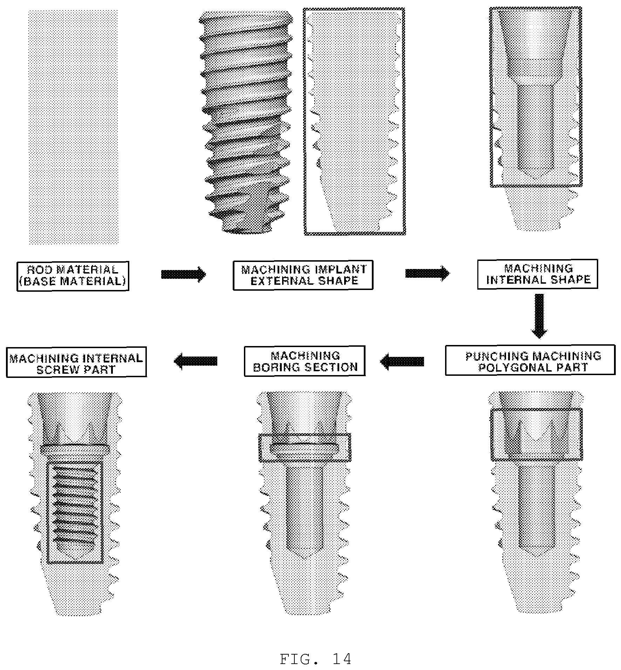

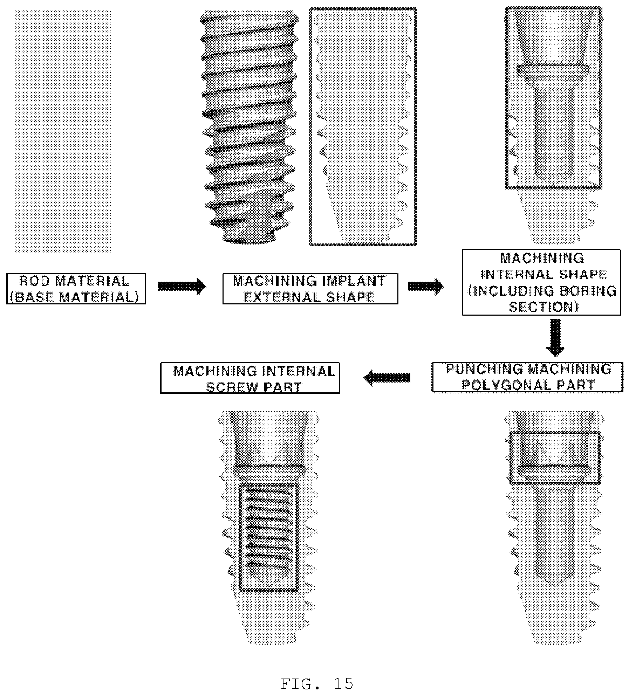

To this end, in the present disclosure, the polygonal part is manufactured by using a method of machining a polygonal part of an implant as illustrated in FIG. 14 and FIG. 15.

FIG. 14 shows an embodiment of a process of manufacturing an implant by a process including: cutting a rod material to a predetermined length, the rod material being a workpiece; machining an implant external shape; and machining an implant internal shape. The machining of the implant internal shape includes: machining an internal groove in a top surface of the implant so that an abutment for prosthesis supporting is capable of being coupled to an internal portion of the implant, in which the internal groove has a circular cross-sectional shape at an entrance portion of the top surface of the implant, has an upper side inclined part having an inner diameter gradually decreases downward, and has a hole through which a screw is to be machined downward; machining a polygonal part by hitting a punching tool toward the upper side inclined part that is machined; machining a boring section on a lower portion including a bottom surface portion of the polygonal part that is machined; and machining an internal screw part to the hole through which the screw is to be machined.

A core of the polygonal part machining method in FIG. 14 is that a region in which a severe plastic deformation is caused on the base material is removed as a boring section while punching is performed so as to form the polygonal part. That is, in addition to the bottom surface portion of the polygonal part formed between the bottom of the polygonal part and the top of the screw part for abutment coupling by performing the punching, a region having a diameter larger than a diameter of a circle circumscribed to the polygonal shape of the polygonal part is removed as a circular boring section.

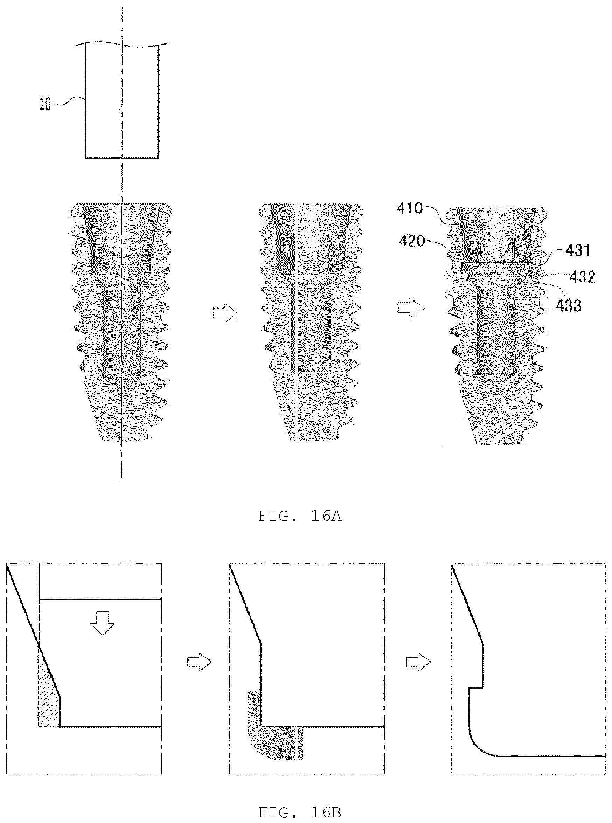

More specifically, as illustrated in FIG. 16A and FIG. 16B, a boring section is formed by removing the lower portion of the polygonal part including the bottom surface portion of the polygonal part with a boring tool, the polygonal part being formed by performing the punching process. The boring section may be machined such that a first vertical part 431 and a round part 432 are formed, and a radius of the boring section is required to be set larger than a radius of a circumscribed circle of the polygonal part.

As such, by machining the boring section, characteristics of a fatigue fracture of the lower portion of the polygonal part according to the present disclosure may be significantly improved. In drawings in FIG. 16B, a middle drawing showing a state immediately after the polygonal part shows a situation in which the workpiece of the base material is plastically deformed downward and pushed into the corner of the polygonal part, and shows a region where a metal flow line is severely deformed and where a possibility of existence of crack nuclei is high as can be seen in FIG. 12A. However, as shown in a right side drawing in FIG. 16B, since a region to be machined including the bottom surface portion of the polygonal part is removed by the boring machining according to the present disclosure, the problem of the conventional technology may be solved.

FIG. 15 shows another embodiment of a process of manufacturing an implant by a process including: cutting a rod material to a predetermined length, the rod material being a workpiece; machining an implant external shape; and machining an implant internal shape. More specifically, the machining of the implant internal shape includes: machining an internal groove in a top surface of the implant so that an abutment for prosthesis supporting is capable of being coupled to an internal portion of the implant, in which the internal groove has a circular cross-sectional shape at an entrance portion of the top surface of the implant, has a boring section which has an upper side inclined part having an inner diameter gradually decreases downward and which has a diameter enlarged to a radius direction from a position where the upper side inclined part ends, and has a hole through which a screw is to be machined downward; machining a polygonal part by hitting a punching tool toward the upper side inclined part that is machined; and machining an internal screw part to the hole through which the screw is to be machined.

A core of the polygonal part machining method in FIG. 15 is that punching for forming the polygonal part is performed after the boring section is pre-machined so that a severe plastic deformation does not occur in the base material. That is, between the bottom of the polygonal part and the top of the screw part for abutment coupling, the circular boring section having a diameter equal to or larger than a diameter of a circle circumscribed to the polygonal shape of the polygonal part is machined before the polygonal part punching process.

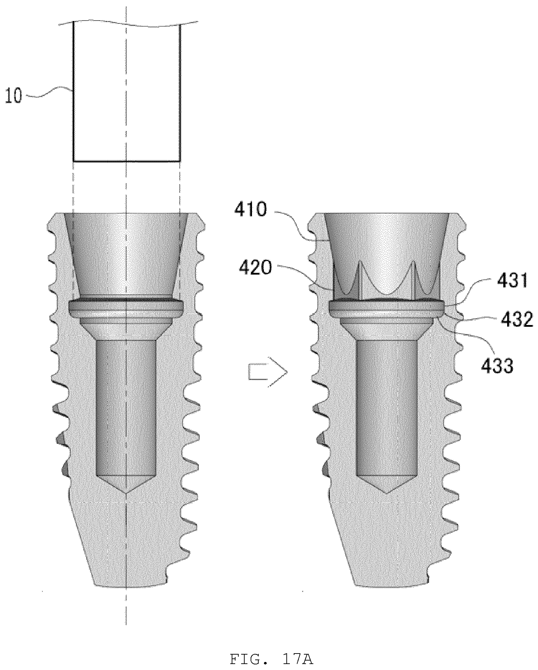

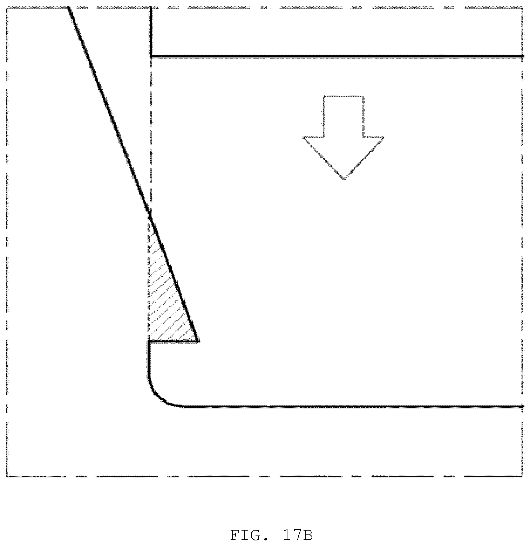

In more detail, as illustrated in Fig. 17, the boring section may be machined on the bottom portion of the inclined part. Furthermore, the boring section may be machined such that the first circular vertical part 431 and the round part 432 which is positioned below the first circular vertical part 431 and which has a predetermined curvature are provided, and the radius of the boring section is required to be set to be larger than a radius of a circle circumscribed to the polygonal part.

As such, by providing the boring section, an aspect of the polygonal part boring process according to the present disclosure is completely different from the polygonal part punching process of the conventional technology. Therefore, according to the method of the present disclosure as illustrated in FIG. 17B, since machining is performed in an aspect in which the punching tool cuts the target machining region of the base material as if the target machining region is cut with a knife or scissors, or is performed in an aspect in which a side surface of the target machining region cannot be pushed to a lower corner (even if the side surface is pushed to the lower corner, the side surface can be easily removed by a general deburring process), so that the problem of the conventional technology may be solved.

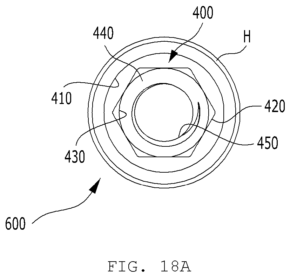

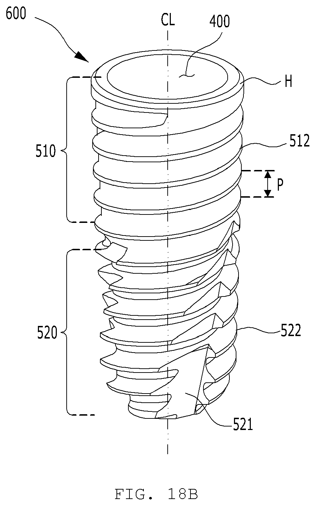

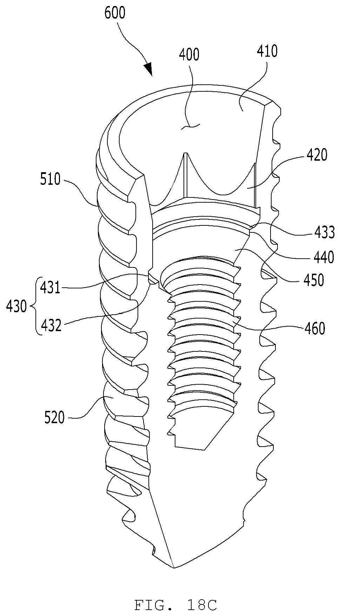

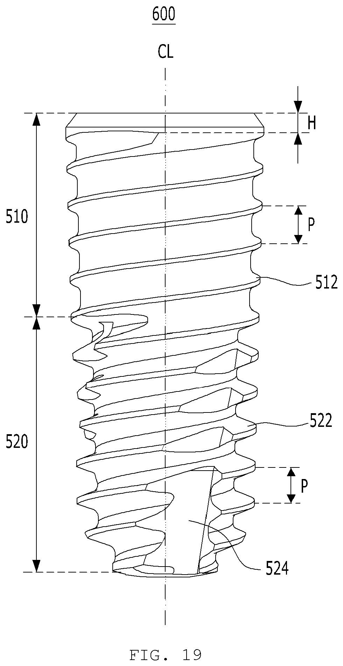

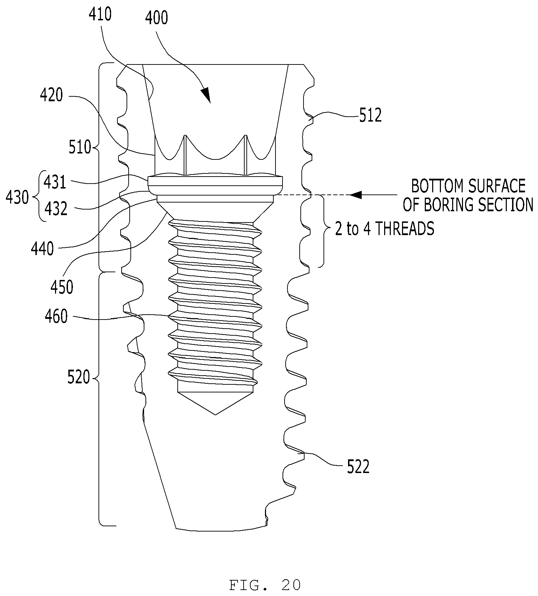

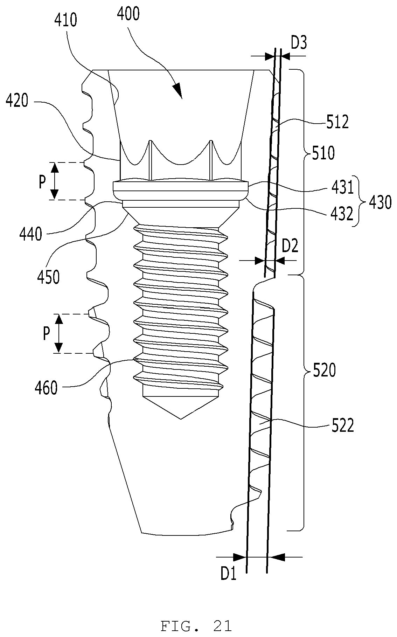

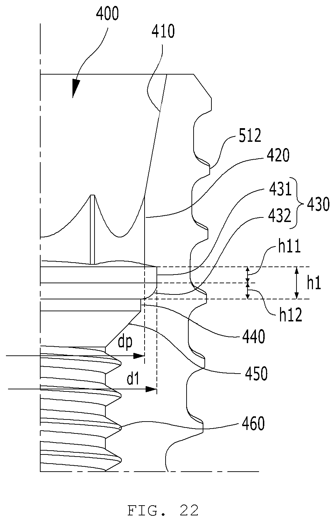

The present disclosure relates to the dental implant having the boring section formed by method described above. FIG. 18 shows a dental implant structure of the present disclosure, in which FIG. 18A is a plan view, FIG. 18B is an external perspective view, and FIG. 18C is an internal cross-sectional perspective view, and FIG. 19 is a front view of FIG. 18. In addition, FIG. 20 is a cross-sectional view illustrating a relationship between the internal structure of the implant and the external thread structure according to the present disclosure, FIG. 21 is a cross-sectional view illustrating a detailed external thread structure of the implant according to the present disclosure, and FIG. 22 is a cross-sectional view specifically illustrating the internal structure of the implant according to the present disclosure.

Referring to FIG. 18 to FIG. 22, the dental implant according to the present disclosure is a dental implant implantable into an alveolar bone tissue according to a rotation movement with respect to an axis line CL, thereby forming an artificial tooth root. In the dental implant, threads having a single pitch P is formed on an outer peripheral surface of the implant, an external bottom thread section 520 on which threads 522 having large valley depths are formed is formed upward from a bottom of the implant up to a predetermined section, and an external top thread section 510 on which threads 512 having small valley depths are formed is formed above the external bottom thread section 520. Furthermore, an internal groove 400 to which an abutment for prosthesis supporting is capable of being coupled is formed inside a top portion of the implant, and the internal groove 400 includes: an upper side inclined part 410 positioned at a top entrance part of the implant, the upper side inclined part 410 having a circular cross-sectional shape and having an inner diameter gradually decreased downward; a polygonal part 420 formed below the upper side inclined part 410, the polygonal part 420 having a polygonal cross-sectional shape; and a screw part 460 for abutment coupling formed below the polygonal part 420, the screw part 460 having threads that has a diameter smaller than a diameter of a circle inscribed in the polygonal shape of the polygonal part. Furthermore, a circular boring section 430 having a diameter larger than a diameter of a circle circumscribed to the polygonal shape of the polygonal part is provided between a bottom of the polygonal part 420 and a top of the screw part 460 for abutment coupling, and the external top thread section 510 is positioned from a bottom surface of the boring section 430 to a section lower by 2 to 4 threads when viewed from the top surface of the implant.

As illustrated in FIG. 20, in the implant of the present disclosure, when the external top thread section 510 having small heights of threads 512 is formed, the external top thread section 510 is formed such that a bottom of the external top thread section 510 is positioned at a bottom surface of the boring section 430 inside the implant. More specifically, the external top thread section 510 is formed such that a bottom of the external top thread section 510 is positioned downward by 2 to 4 threads from a bottom surface of the round part 432 of the boring section 430.

As such, when the bottommost of the external top thread section 510 is disposed to be positioned downward by 2 to 4 threads 512 from the bottom surface of the boring section 430, the implant may be reinforced by securing the external top thread section 510 that has a thick implant thickness to a lower side of the boring section 430 in addition to the boring section 430 of the present disclosure for preventing a severe plastic deformation and an existence of crack nuclei during forming the polygonal part 420 in the internal groove 400 of the implant, so that a fatigue fracture phenomenon occurring near the bottom of the polygonal part 420 may be more clearly prevented.

In addition, as an embodiment of the present disclosure, in order to machine the threads 512 and 522 having a single pitch P on the outer peripheral surface of the implant, two bits having different machining surface shapes sequentially enter into a machining target surface of an implant base material in a state before threads are machined as illustrated in FIG. 10B, and then the two bits are moved to the top of the implant from the bottom of the implant and the machining is performed, so that the two thread sections 510 and 520 having different valley depths may be formed on the outer peripheral surface of the implant.

That is, the threads 522 having large valley depths (or large crest heights) may be machined by using the first bit 230 from the bottom of the implant to a predetermined section in an upward direction so as to form the external bottom thread section 520, and the threads 512 having small valley depths (or small crest heights) may be machined by using the second bit 240 above the external bottom thread section 520 so as to form the external top thread section 510.

In this case, as illustrated in FIG. 21, valley depths D2 and D3 of the threads 512 formed on the external top thread section 510 may be smaller than a valley depth D1 of the threads 522 formed on the external bottom thread section 520. Furthermore, in the external top thread section 510, the valley depths D2 and D3 (or crest heights) of the threads 512 may be gradually decreased from the bottom of the external top thread section 510 to the top of the external top thread section 510. That is, in the external top thread section 510, a valley depth of the threads is gradually decreased from the valley depth D2 of the bottommost thread to the upper portion of the threads, so that the valley depth D3 of the topmost thread may have the smallest valley depth.

In this manner, when a structure in which heights (depths) of the threads 512 formed on the external top thread section 510 of the implant is gradually decreased to the upper portion of the external top thread section 510 is formed, the implant may be more securely fixed to a cortical bone region of an alveolar bone surface, and also a wall thickness of a top portion of the implant is increased so that a rigidity of the top portion of the implant is secured, so that a robustness for the top portion of the implant where a longitudinal fracture may occur may be increased.

Meanwhile, the circular boring section 430 formed inside the implant is a circular section having a diameter larger than a diameter of a circle circumscribed to the polygonal shape of the polygonal part. Preferably, the boring section 430 may include the first circular vertical part 431 and the round part 432 which is positioned below the first circular vertical part 431 and which has a predetermined curvature, and a diameter of the first circular vertical part 431 may be larger than a diameter of a circle circumscribed to the polygonal part.

As a preferable embodiment, a ratio of the diameter of the first circular vertical part 431 of the circular boring section 430 to the diameter of the circle circumscribed to the polygonal part may be equal to or larger than 100% to equal to or smaller than 115%.

In addition, an overall height h1 along an axis line CL direction of the circular boring section 430 may be set to 0.1 mm to 1.5 mm.

That is, it is preferable that a ratio of a diameter d1 of the first circular vertical part 431 of the circular boring section 430 illustrated in FIG. 22 to a diameter dp of a circle circumscribed to the polygonal part is equal to or larger than 100% to equal to or smaller than 115%, and it is preferable that the overall height h1 along the axis line CL direction of the circular boring section 430 is 0.1 mm to 1.5 mm.

In addition, the polygonal part 420 is a portion connected to the lower side of the upper side inclined part 410, and has a polygonal cross-sectional shape and to which a driver (not illustrated) is fastened when an implantation process is performed. At this time, the polygonal part 420 is as an embodiment, and it is illustrated that a cross-sectional shape of the polygonal part 420 is a regular hexagonal shape, but various regular polygonal shapes such as a regular octagonal shape, a regular dodecagonal shape, and so on may be formed.

When the shape of the polygonal part is changed from the regular hexagonal shape to the regular octagonal shape or the regular dodecagonal shape, a range of selection for a direction when an abutment is fastened is increased from 6 to 8 or 12, so that there is an advantage that the abutment is fastened in a more accurate direction for each patient.

Next, a second circular vertical part 440 is a portion which is connected to the lower side of the boring section 430 and which has a circular cross-sectional shape, and an internal inclined part 450 is a portion connecting a space between the second circular vertical part 440 and the screw part 460 for abutment coupling. Furthermore, a top of the internal inclined part 450 has a diameter same as a diameter of the second circular vertical part 440 and a bottom of the internal inclined part 450 has a diameter same as a diameter of the screw part 460 for abutment coupling. Such an internal inclined part 450 is formed in a structure in which an inner diameter thereof is gradually decreased downward.

In addition, in the dental implant of the present disclosure, in the same manner as in FIG. 9, the thread non-machining section H in which a thread machining is not performed may be provided on the upper portion of the external top thread section 510 from the topmost of the implant to the lower side of the implant by a predetermined section. At this time, it is preferable that such a thread non-machining section H is formed from the topmost of the implant to a position point 0.2 mm to 0.3 mm in the downward direction (see FIG. 9). In addition, a chamfer machining of about 0.12 mm may be performed on a circumferential portion of a top surface of the thread non-machining section H.

Such a thread non-machining section H is a section provided so as to additionally secure a robustness of the top portion of the implant where a longitudinal fracture may occur.

Meanwhile, in the implant of the present disclosure, in order to form the two thread sections 510 and 520 having different thread valley depths (or thread crest heights) on the outer peripheral surface portion of the implant, thread machining may be performed on a machining target surface of an implant base material by using the two bits 230 and 240 having different machining surface shapes as illustrated in FIG. 10B.

That is, when the external bottom thread section 520 is formed, the first bit 230 is entered into the implant base material and machining of the threads 522 having large thread valley depths (or high crest heights) is performed. Furthermore, at a time point when the machining of the threads 522 by the first bit 230 is finished, the first bit 230 is replaced with the second bit 240, and machining of the threads 512 of the external top thread section 510 is performed.

In addition, in order to form the thread non-machining section H in which thread machining is not performed to a predetermined height (0.2 to 0.3 mm) from the topmost of the implant to the lower side of the implant as described above, the external top thread machining of the implant performed by the second bit 240 is not performed to the topmost portion of the implant as illustrated in FIG. 8. Furthermore, the thread machining is performed by increasing an inclination of a machining trajectory of the second bit 240 at a point spaced apart by a predetermined distance downward from the topmost of the implant, so that the external top of the implant may be formed in the closed thread structure.

That is, as illustrated in FIG. 8, in order to form the closed thread structure on the external top of the implant, a specific point where the second bit 240 performing machining of the threads 512 by moving along the first movement trajectory P1 while the external top thread machining is performed by the second bit 240 deviates from the first movement trajectory P1 and moves to the second movement trajectory P2 is required to be set. When the ending point EP that is a point where the second bit 240 moving along the first movement trajectory P1 and performing the machining of the threads 512 deviates from the first movement trajectory P1 (or a starting point of the second movement trajectory) is set to a lower side of the thread non-machining section H, the closed thread structure may be formed on the external top of the implant.

In this case, it is preferable to set the ending point EP point at which the machining of the threads 512 by the second bit 240 is finished to be positioned 0.6 mm to 0.8 mm from the topmost of the implant. At this time, the ending point EP is a position at a distal end center point of the second bit 240 at a time point when the second bit 240 deviates from the first movement trajectory P1.

In addition, it is preferable that the second movement trajectory P2 in which the second bit 240 is moved after the first movement trajectory P1 is inclined at an angle of 23.5 degrees to 26.5 degrees with respect to an axis line of the implant.

As described above, in machining the external top threads of the implant by using the second bit 240, the closed thread structure may be formed on the top portion of the implant by changing a departure position and a departure angle of the second bit 240. Therefore, a structural rigidity of the top portion of the implant may be increased by reinforcing a thickness of the top portion of the implant, so that the top portion of the implant vulnerable to a longitudinal fracture may be reinforced, thereby being capable of preventing a fatigue fracture.

Meanwhile, in order to machine the threads 512 and 522 having the same pitch P on the outer surface of the implant, it is preferable that there is a difference in the shape of an end portion machining surface of the first bit 230 that performs the external bottom thread machining of the implant and an end portion machining surface of the second bit 240 that performs the external top thread machining

FIG. 10 described above shows thread valley depths and thread widths when external threads are machined on an implant by using bits having the same shape and when external threads are machined on an implant by using two bits having shapes different from each other.

First, in FIG. 10A, a conventional case in which the external bottom threads 522 and the external top threads 512 are machined by using the same bits is illustrated. In the conventional case, the bits having the same end portion machining surface shape are used at the top and the bottom of the implant, and there is no problem at crest widths at the external bottom threads 522 having larger valley depths, but crest widths suddenly increase at the external top threads 512 having small valley depths. Therefore, when the implant is implanted into an alveolar bone, a relatively large torque is drastically required at a corresponding border region, and an implantation process of the implant is not smoothly performed and damage to the alveolar bone may occur.

On the other hand, as illustrated in FIG. 10B, in the present disclosure, the thread machining is performed by varying the shape and the width of the end portion machining surfaces of the first bit 230 and the second bit 240 that are configured to respectively machining the external bottom threads 522 and the external top threads 512. Therefore, a thread structure in which the pitch P of each thread is the same and the crest width of each thread is the same although valley depths of each of the threads 512 and 522 respectively formed at the external top thread section 510 and the external bottom thread section 520 of the implant are different from each other may be formed. As such, when the crest width of the threads is formed narrowly, an area of the thread valley is increased compared to that of a conventional technology, so that an advantageous effect in a blasting process or a coating process may be realized.

The preferred embodiments of the present disclosure have been disclosed for illustrative purposes; however, the scope of the present invention is defined by the appended claims.

## Claims

1. A dental implant (300) implantable into an alveolar bone tissue and forming an artificial tooth root, the dental implant (300) comprising:
an external bottom thread section (220, 520) machined up to a predetermined section upward from a bottom of an outer peripheral surface of the implant (300) so that threads (212, 512) having large heights are formed by a first bit (230); and
an external top thread section (210, 510) machined above the external bottom thread section (220, 520) so that threads (222, 522) having small heights are formed by a second bit (240) having a machining surface shape and a width that are different from a machining surface shape and a width of the first bit (230),
wherein the threads (212, 222, 512, 522) of each thread section (210, 220, 510, 520) machined through the first bit (230) and the second bit (240) have the same pitches (P) and the same crest widths, and
wherein an internal groove (100, 400) to which an abutment for prosthesis supporting is capable of being coupled is formed inside a top portion of the implant (300), and the internal groove (100, 400) comprises:
an upper side inclined part (110, 410) positioned at a top entrance part of the implant (300), the upper side inclined part (110, 410) having a circular cross-sectional shape and having an inner diameter gradually decreased downward;
a polygonal part (120, 420) formed below the upper side inclined part (110; 410), the polygonal part (120, 420) having a polygonal cross-sectional shape; and
a screw part (150, 460) for abutment coupling formed below the polygonal part (120, 420), the screw part (150, 460) having threads (152) that have a diameter smaller than a diameter (dp) of a circle inscribed in the polygonal shape of the polygonal part (120, 420),
wherein a boring section (430) having a circular shape and having a diameter larger than a diameter (dp) of a circle circumscribed to the polygonal shape of the polygonal part (120, 420) is formed between a bottom of the polygonal part (120, 420) and a top of the screw part (150, 460) for abutment coupling, and
and wherein the boring section (430) is machined prior to punching the polygon part (120, 420).

2. The dental implant (300) of claim 1, wherein a thread valley depth (D1) of the external top thread section (210, 510) is gradually decreased from a lower portion of the external top thread section (210, 510) to an upper portion of the external top thread section (210, 510).

3. The dental implant (300) of claim 1, wherein the external top thread section (210, 510) is provided with a thread non-machining section (H), that is a section in which threads are not formed over a predetermined section downward from a topmost of the implant (300).

4. The dental implant (300) of claim 3, wherein the thread non-machining section (H) is formed from the topmost of the implant (300) to a position of 0.2 mm to 0.3 mm downward.

5. The dental implant (300) of claim 3, wherein an ending point (EP), that is a point at which an inclination of an external top thread machining trajectory is changed, is set at a lower side of the thread non-machining section (H), and the ending point (EP) is positioned at a point of 0.6 mm to 0.8 mm from the topmost of the implant (300).

6. The dental implant (300) of claim 5, wherein a movement trajectory in which the second bit (240) performing a thread machining of the external top thread section (210, 510) moves away from the ending point (EP) after the thread machining is finished is inclined at an angle of 23.5 degrees to 26.5 degrees with respect to an axis line (CL) of the implant (300).

7. The dental implant (300) of claim 1, wherein the external top thread section (210, 510) is positioned from a bottom of the polygonal part (120, 420) to a lower side section of the implant (300) by 2 to 4 threads (212, 512) when viewed from a lateral side of the implant (300).

8. The dental implant (300) of claim 1, further comprising a circular vertical part (130) having a circular cross-sectional shape and being formed below the polygonal part (120, 420) such that the circular vertical part (130) is connected to the polygonal part (120, 420).

9. The dental implant (300) of claim 8, further comprising a lower side inclined part (140) formed between the circular vertical part (130) and the screw part (150, 460) for abutment coupling such that the lower side inclined part (140) connects the circular vertical part (140) and the screw part (150, 460) for abutment coupling to each other, the lower side inclined part (140) having a top that has a diameter same as a diameter of the circular vertical part (130), the lower side inclined part (140) having a bottom that has a diameter same as a diameter of the screw part (150, 460) for abutment coupling, and the lower side inclined part (140) being formed such that an inner diameter thereof is gradually decreased downward.

10. The dental implant (300) of claim 1, wherein the external top thread section (210, 510) is positioned from a bottom of the boring section (430) to a lower side section of the implant (300) by 2 to 4 threads (212, 512) when viewed from a lateral side of the implant (300).

11. The dental implant (300) of claim 1, wherein the boring section (430) having the circular shape is provided with a first circular vertical part (431) and a round part (432) which is positioned below the first circular vertical part (431) and which has a predetermined curvature, and a diameter (d1) of the first circular vertical part (431) is larger than the diameter (dp) of the circle circumscribed to the polygonal part (120, 420).

12. The dental implant (300) of claim 11, wherein a ratio of the diameter (d1) of the first circular vertical part (431) of the boring section (430) having the circular shape to the diameter (dp) of the circle circumscribed to the polygonal part (120, 420) is larger than 100% or smaller than 115%.

13. The dental implant (300) of claim 1, wherein an overall height along an axis line direction of the boring section (430) having the circular shape is set to 0.1 mm to 1.5 mm.

14. The dental implant (300) of claim 1, wherein a cross sectional shape of the polygonal part (120, 420) is any one shape of a regular hexagonal shape, a regular octagonal shape, and a regular dodecagonal shape.

## Patentansprüche

1. Zahnimplantat (300), das in ein Alveolarknochengewebe implantierbar ist und eine künstliche Zahnwurzel bildet, wobei das Zahnimplantat (300) aufweist:
einen äußeren unteren Gewindeabschnitt (220, 520), der bis zu einem vorbestimmten Abschnitt von einem Boden einer äußeren Umfangsfläche des Implantats (300) nach oben bearbeitet ist, so dass Gewindegänge (212, 512) großer Gewindetiefe durch ein erstes Fräswerkzeug (230) gebildet sind; und
einen äußeren oberen Gewindeabschnitt (210, 510), der oberhalb des äußeren unteren Gewindeabschnitts (220, 520) bearbeitet ist, so dass Gewindegänge (222, 522) geringer Gewindetiefe durch ein zweites Fräswerkzeug (240) gebildet sind, das eine Bearbeitungsoberflächenform und eine Breite aufweist, die sich von einer Bearbeitungsoberflächenform und einer Breite des ersten Fräswerkzeugs (230) unterscheiden,
wobei die Gewinde (212, 222, 512, 522) jedes durch das erster Fräswerkzeug (230) und das zweite Fräswerkzeug (240) bearbeiteten Gewindeabschnitts (210, 220, 510, 520) gleiche Steigungen (P) und gleiche Scheitelbreiten aufweisen, und
wobei eine innere Nut (100, 400), an die ein Abutment zur Prothesenstützung ankoppelbar ist, innerhalb eines oberen Abschnitts des Implantats (300) ausgebildet ist, und die innere Nut (100, 400) aufweist:
einen oberen Seiten-Schrägabschnitt (110, 410), angeordnet an einem oberen Eintrittsabschnitt des Implantats (300), wobei der obere Seiten-Schrägabschnitt (110, 410) eine kreisförmige Querschnittsform aufweist und einen nach unten allmählich verringerten Innendurchmesser aufweist;
einen polygonalen Abschnitt (120, 420), der unterhalb des oberen Seiten-Schrägabschnitts (110, 410) ausgebildet ist, wobei der polygonale Abschnitt (120, 420) eine polygonale Querschnittsform aufweist; und
einen Schraubenabschnitt (150, 460) zur Abutment-Kupplung, ausgebildet unterhalb des polygonalen Abschnitts (120, 420), wobei der Schraubenabschnitt (150, 460) Gewindegänge (152) aufweist, die einen kleineren Durchmesser als einen Durchmesser (dp) eines in die polygonale Form des polygonalen Abschnitts (120, 420) einbeschriebenen Kreises aufweisen,
wobei ein Bohrabschnitt (430) mit einer kreisförmigen Form und mit einem Durchmesser, der größer ist als ein Durchmesser (dp) eines um die polygonale Form des polygonalen Abschnitts (120, 420) beschriebenen Kreises, zwischen einem Boden des polygonalen Abschnitts (120, 420) und einem oberen Abschnitt des Schraubenabschnitts (150, 460) zur Abutment-Kupplung ausgebildet ist, und
wobei der Bohrabschnitt (430) vor dem Ausstanzen des polygonalen Abschnitts (120, 420) bearbeitet ist.

2. Zahnimplantat (300) nach Anspruch 1, wobei eine Gewindetaltiefe (D1) des äußeren oberen Gewindeabschnitts (210, 510) von einem unteren Abschnitt des äußeren oberen Gewindeabschnitts (210, 510) zu einem oberen Abschnitt des äußeren oberen Gewindeabschnitts (210, 510) allmählich verringert ist.

3. Zahnimplantat (300) nach Anspruch 1, wobei der äußere obere Gewindeabschnitt (210, 510) einen Gewinde-Nichtbearbeitungsabschnitt (H) aufweist, der ein Abschnitt ist, in dem über einen vorbestimmten Abschnitt von einer obersten Stelle des Implantats (300) nach unten keine Gewindegänge ausgebildet sind.

4. Zahnimplantat (300) nach Anspruch 3, wobei der Gewinde-Nichtbearbeitungsabschnitt (H) von der obersten Stelle des Implantats (300) bis zu einer Position von 0,2 mm bis 0,3 mm nach unten ausgebildet ist.

5. Zahnimplantat (300) nach Anspruch 3, wobei ein Endpunkt (EP), der ein Punkt ist, an dem eine Neigung einer Bearbeitungstrajektorie des äußeren oberen Gewindes geändert ist, an einer unteren Seite des Gewinde-Nichtbearbeitungsabschnitts (H) festgelegt ist, und wobei der Endpunkt (EP) an einem Punkt von 0,6 mm bis 0,8 mm von der obersten Stelle des Implantats (300) positioniert ist.

6. Zahnimplantat (300) nach Anspruch 5, wobei eine Bewegungsbahn, in der sich das zweite Fräswerkzeug (240), das eine Gewindebearbeitung des äußeren oberen Gewindeabschnitts (210, 510) ausführt, nach Beendigung der Gewindebearbeitung vom Endpunkt (EP) entfernt, in einem Winkel von 23,5 Grad bis 26,5 Grad bezüglich einer Achsenlinie (CL) des Implantats (300) geneigt ist.

7. Zahnimplantat (300) nach Anspruch 1, wobei der äußere obere Gewindeabschnitt (210, 510) von einem Boden des polygonalen Abschnitts (120, 420) zu einem unteren Seitenabschnitt des Implantats (300) um 2 bis 4 Gewindegänge (212, 512) angeordnet ist, wenn von einer Seitenansicht des Implantats (300) betrachtet.

8. Zahnimplantat (300) nach Anspruch 1, das des Weiteren einen kreisförmigen Vertikalabschnitt (130) mit einer kreisförmigen Querschnittsform aufweist, der unterhalb des polygonalen Abschnitts (120, 420) ausgebildet ist, so dass der kreisförmige Vertikalabschnitt (130) mit dem polygonalen Abschnitt (120, 420) verbunden ist.

9. Zahnimplantat (300) nach Anspruch 8, das des Weiteren einen unteren Seiten-Schrägabschnitt (140) aufweist, der zwischen dem kreisförmigen Vertikalabschnitt (130) und dem Schraubenabschnitt (150, 460) zur Abutment-Kupplung ausgebildet ist, so dass der untere Seiten-Schrägabschnitt (140) den kreisförmigen Vertikalabschnitt (130) und den Schraubenabschnitt (150, 460) zur Abutment-Kupplung miteinander verbindet, wobei der untere Seiten-Schrägabschnitt (140) oben einen Durchmesser, der dem Durchmesser des kreisförmigen Vertikalabschnitts (130) entspricht, und unten einen Durchmesser aufweist, der dem Durchmesser des Schraubenabschnitts (150, 460) zur Abutment-Kupplung entspricht, und wobei der untere Seiten-Schrägabschnitt (140) derart ausgebildet ist, dass sein Innendurchmesser nach unten allmählich verringert ist.

10. Zahnimplantat (300) nach Anspruch 1, wobei der äußere obere Gewindeabschnitt (210, 510) von einem Boden des Bohrabschnitts (430) zu einem unteren Seitenabschnitt des Implantats (300) um 2 bis 4 Gewindegänge (212, 512) angeordnet ist, wenn von einer Seitenansicht des Implantats (300) betrachtet.

11. Zahnimplantat (300) nach Anspruch 1, wobei der Bohrabschnitt (430) mit der kreisförmigen Form einen ersten kreisförmigen Vertikalabschnitt (431) und einen Rundabschnitt (432) aufweist, der unterhalb des ersten kreisförmigen Vertikalabschnitts (431) angeordnet ist und eine vorbestimmte Krümmung aufweist, und wobei ein Durchmesser (d1) des ersten kreisförmigen Vertikalabschnitts (431) größer ist als der Durchmesser (dp) des um den polygonalen Abschnitt (120, 420) beschriebenen Kreises.

12. Zahnimplantat (300) nach Anspruch 11, wobei ein Verhältnis des Durchmessers (d1) des ersten kreisförmigen Vertikalabschnitts (431) des Bohrabschnitts (430) mit der kreisförmigen Form zu dem Durchmesser (dp) des um den polygonalen Abschnitt (120, 420) beschriebenen Kreises größer als 100 % oder kleiner als 115 % ist.

13. Zahnimplantat (300) nach Anspruch 1, wobei eine Gesamthöhe entlang einer Achsenlinienrichtung des Bohrabschnitts (430) mit der kreisförmigen Form auf 0,1 mm bis 1,5 mm eingestellt ist.

14. Zahnimplantat (300) nach Anspruch 1, wobei eine Querschnittsform des polygonalen Abschnitts (120, 420) eine beliebige Form aus einer regelmäßigen Sechseckform, einer regelmäßigen Achteckform und einer regelmäßigen Zwölfeckform ist.

## Revendications

1. Implant dentaire (300) implantable dans un tissu osseux alvéolaire et formant une racine dentaire artificielle, l'implant dentaire (300) comprenant :
une section de filetage inférieur externe (220, 520) usinée jusqu'à une section prédéterminée vers le haut à partir du bas d'une surface périphérique externe de l'implant (300) de sorte que des filets (212, 512) de grandes hauteurs soient formés par un premier foret (230) ; et
une section de filetage supérieur externe (210, 510) usinée au-dessus de la section de filetage inférieur externe (220, 520) de sorte que des filets (222, 522) de petites hauteurs soient formés par un second foret (240) ayant une forme de surface d'usinage et une largeur différentes de la forme de surface d'usinage et de la largeur du premier foret (230),
les filets (212, 222, 512, 522) de chaque section de filet (210, 220, 510, 520) usinés grâce au premier foret (230) et au second foret (240) ayant les mêmes pas (P) et les mêmes largeurs de crête, et
une rainure interne (100, 400) à laquelle une butée de support de prothèse peut être couplée étant formée à l'intérieur d'une partie supérieure de l'implant (300), et la rainure interne (100, 400) comprenant :
une partie inclinée côté supérieur (110, 410) positionnée au niveau d'une partie d'entrée supérieure de l'implant (300), la partie inclinée côté supérieur (110, 410) ayant une forme de section transversale circulaire et ayant un diamètre intérieur diminuant progressivement vers le bas ;
une partie polygonale (120, 420) formée sous la partie inclinée côté supérieur (110 ; 410), la partie polygonale (120, 420) ayant une forme de section transversale polygonale ; et
une partie vis (150, 460) servant à un accouplement par butée formée sous la partie polygonale (120, 420), la partie vis (150, 460) ayant des filets (152) qui ont un diamètre inférieur à un diamètre (dp) d'un cercle inscrit dans la forme polygonale de la partie polygonale (120, 420),
une section d'alésage (430) ayant une forme circulaire et ayant un diamètre supérieur à un diamètre (dp) d'un cercle tracé sur la forme polygonale de la partie polygonale (120, 420) étant formée entre un fond de la partie polygonale (120, 420) et un sommet de la partie filetée (150, 460) pour un couplage par butée, et
la section d'alésage (430) étant usinée avant le poinçonnage de la partie polygonale (120, 420).

2. Implant dentaire (300) selon la revendication 1, dans lequel une profondeur de creux de filet (D1) de la section de filet supérieure externe (210, 510) diminue progressivement d'une partie inférieure de la section de filet supérieure externe (210, 510) à une partie supérieure de la section de filet supérieure externe (210, 510).

3. Implant dentaire (300) selon la revendication 1, dans lequel la section filetée supérieure externe (210, 510) est pourvue d'une section de non-usinage de filetage (H), c'est-à-dire une section dans laquelle les filets ne sont pas formés sur une section prédéterminée vers le bas à partir d'une partie supérieure extrême de l'implant (300).

4. Implant dentaire (300) selon la revendication 3, dans lequel la section de non-usinage de filetage (H) est formée à partir de la partie supérieure extrême de l'implant (300) jusqu'à une position de 0,2 mm à 0,3 mm vers le bas.

5. Implant dentaire (300) selon la revendication 3, dans lequel un point d'extrémité (EP) qui est un point auquel une inclinaison d'une trajectoire d'usinage de filetage supérieur externe change est définie sur un côté inférieur de la section de non-usinage de filetage (H), et le point d'extrémité (EP) est positionné sur un point situé à 0,6 mm à 0,8 mm du plus haut de l'implant (300).

6. Implant dentaire (300) selon la revendication 5, dans lequel une trajectoire de mouvement dans laquelle le second foret (240) effectuant un usinage de filetage de la section de filetage supérieure externe (210, 510) s'éloigne du point d'extrémité (EP) après la fin de l'usinage de filetage est inclinée suivant un angle de 23,5 degrés à 26,5 degrés par rapport à une ligne d'axe (CL) de l'implant (300).

7. Implant dentaire (300) selon la revendication 1, dans lequel la section filetée supérieure externe (210, 510) est positionnée depuis un bas de la partie polygonale (120, 420) jusqu'à une section latérale inférieure de l'implant (300) par 2 à 4 filetages (212, 512) lorsqu'elle est vue depuis un côté latéral de l'implant (300) .

8. Implant dentaire (300) selon la revendication 1, comprenant en outre une partie verticale circulaire (130) ayant une forme de section transversale circulaire et étant formée au-dessous de la partie polygonale (120, 420), de telle sorte que la partie verticale circulaire (130) est connectée à la partie polygonale (120, 420).

9. Implant dentaire (300) selon la revendication 8, comprenant en outre une partie inclinée latérale inférieure (140) formée entre la partie verticale circulaire (130) et la partie vis (150, 460) pour un couplage par butée, de telle sorte que la partie inclinée latérale inférieure (140) relie la partie verticale circulaire (140) et la partie vis (150, 460) pour un couplage par butée l'une à l'autre, la partie inférieure inclinée (140) présentant un sommet dont le diamètre est identique au diamètre de la partie verticale circulaire (130), la partie inférieure inclinée de la face inférieure (140) présentant un fond dont le diamètre est identique au diamètre de la partie vis (150, 460) pour le couplage par butée, et la partie inférieure inclinée de la face inférieure (140) étant formée de sorte que son diamètre intérieur diminue progressivement vers le bas.

10. Implant dentaire (300) selon la revendication 1, dans lequel la section filetée supérieure externe (210, 510) est positionnée à partir d'un fond de la section d'alésage (430) vers une section latérale inférieure de l'implant (300) par 2 à 4 filets (212, 512) lorsqu'elle est vue depuis un côté latéral de l'implant (300).

11. Implant dentaire (300) selon la revendication 1, dans lequel la section d'alésage (430) ayant la forme circulaire est pourvue d'une première partie verticale circulaire (431) et d'une partie ronde (432) qui est positionnée au-dessous de la première partie verticale circulaire (431) et qui a une courbure prédéterminée, et un diamètre (dl) de la première partie verticale circulaire (431) est supérieur au diamètre (dp) du cercle tracé sur la partie polygonale (120, 420).

12. Implant dentaire (300) selon la revendication 11, dans lequel un rapport du diamètre (dl) de la première partie verticale circulaire (431) de la section d'alésage (430) ayant la forme circulaire au diamètre (dp) du cercle tracé sur un la partie polygonale (120, 420) est supérieur à 100 % ou inférieur à 115 %.

13. Implant dentaire (300) selon la revendication 1, dans lequel une hauteur totale le long d'une direction de ligne d'axe de la section d'alésage (430) ayant la forme circulaire est fixée à 0,1 mm à 1,5 mm.

14. Implant dentaire (300) selon la revendication 1, dans lequel une forme de section transversale de la partie polygonale (120, 420) est une forme quelconque parmi un forme hexagonale régulière, une forme octogonale régulière, et une forme dodécagonale régulière.
